# NEW EUROPEAN PATENT SPECIFICATION

(11) **EP 0 792 824 B2**
(45) Date of publication and mention of the opposition decision: **14.07.2004**
(45) Mention of the grant of the patent: 19.07.2000
(21) Application number: 97201512.7
(22) Date of filing: 29.10.1993
(51) Int. Cl.: B65G 47/84

(54) **A conveyor**
Förderer
Transporteur

(30) Priority: 16.12.1992 NL 9202171
(43) Date of publication of application: 03.09.1997
(62) Divisional of application: 93203039.8
(73) Proprietor: VANDERLANDE INDUSTRIES NEDERLAND B.V., NL-5466 RB Veghel (NL)
(72) Inventor: van den Goor, Jakobus Marie, 5641 WG Eindhoven (NL)
(74) Representative: Vollebregt, Cornelis Jacobus, Ir.

(56) References cited:
- EP-A- 0 444 734
- EP-A- 0 484 150
- US-A- 4 760 908

## Description

The invention relates to a conveyor comprising a frame and an endless drivable transport means, provided with carriers extending transversely to the direction of movement of the transport means, parallel to each other, which carriers are pivotally coupled to at least one endless flexible coupling means, whilst at least a few of said carriers support pusher shoes, which are movable along the carriers in question at desired locations by guide means provided on the frame, wherein a pusher shoe is in one piece and provided with a passage, through which the carrier extends, the cross-section of said carrier being adapted to the cross section of the passage within the pusher shoe and wherein for guiding the pusher shoe along the carrier the combination of pusher shoe and carriers comprises a slot extending in the longitudinal direction of the carrier and a rib accommodated in said slot.

Conveyors of this kind (see e.g. EP-A-0484150) are used for conveying objects, whereby objects present on the transport means can be laterally discharged from the transport means at desired locations, by moving a number of pusher shoes along the carriers in a desired direction, which pusher shoes push the object in question from the transport means transversely to the direction of movement of the transport means.

In practise it has become apparent that when using conveyors of this kind there is a danger that the pusher shoe is tilted with respect to the carrier when the pusher shoe is displaced with respect to the carrier and may become jammed.

According the invention the conveyor presents the features mainly claimed in claim 1.

By using the construction according to the invention a very simple construction of the pusher shoe, which is preferably made of plastic material, may be obtained, which pusher shoe is smoothly and substantially noise-less movable along the carrier without using any auxiliary means, such as rollers or the like, which results in a very simple construction of the transport means.

The invention will be explained in more detail hereafter with reference to the accompanying figures.

Figures 1-3 are diagrammatic plan views of a conveyor according to the invention, illustrating various stages of the displacement of an object by means of pusher shoes.

Figure 4 is a perspective view of a sliding shoe with an associated carrier.

Figure 5 is a cross-sectional view of a carrier with a sliding shoe mounted thereon.

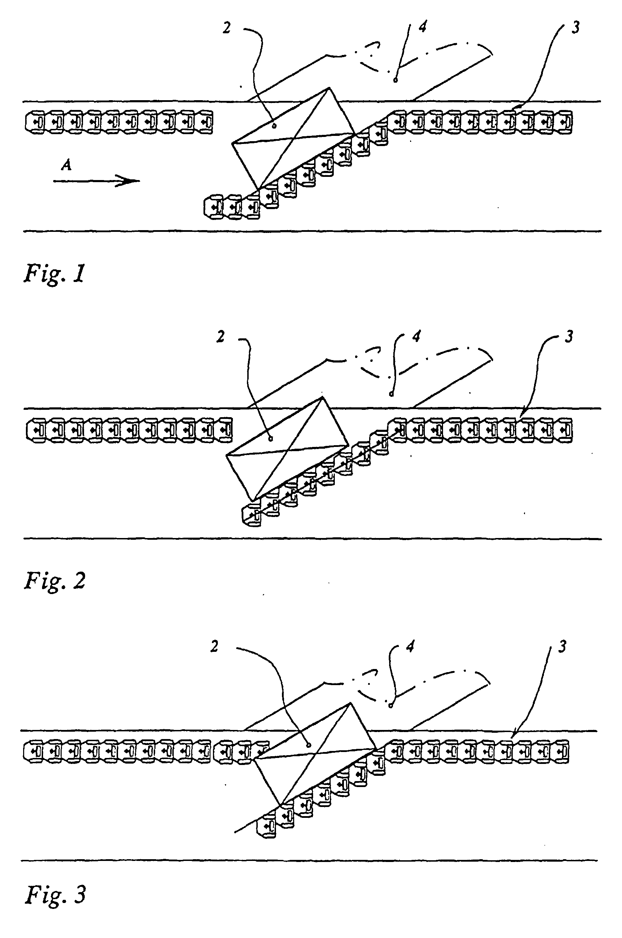

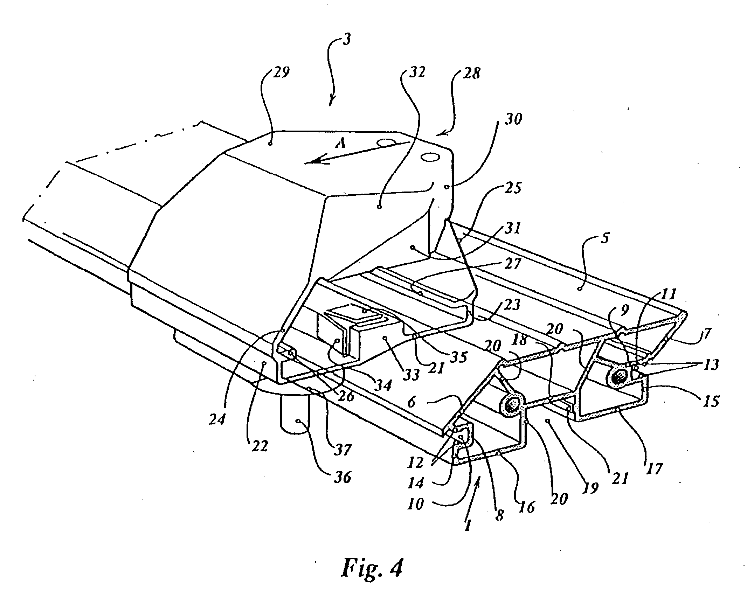

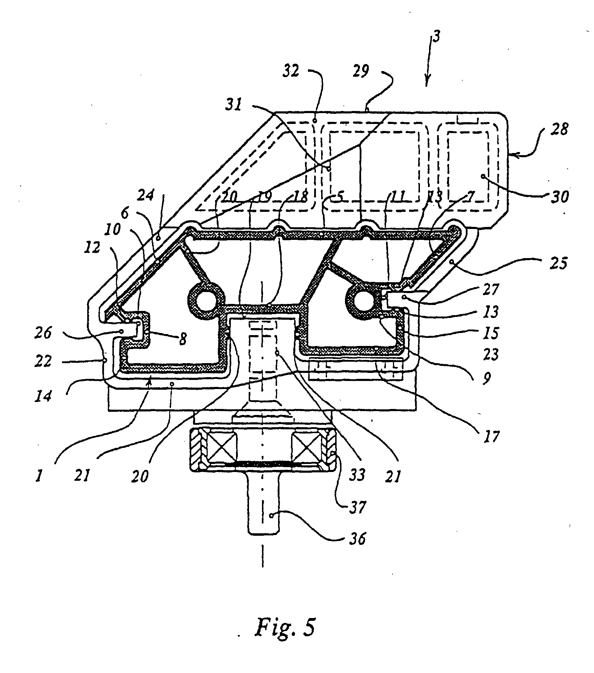

The conveyor shown in the figures is provided with a transport means, which is built up of a plurality of carriers 1 extending parallel to each other, said carriers being connected by one or more flexible coupling means to form an endless transport means, on whose upper part objects 2 can be moved in the direction according to the arrow A, as is diagrammatically indicated in figures 1-3. Pusher shoes 3 are coupled to the carriers, in such a manner that said pusher shoes can be moved with respect to the carriers transversely to the longitudinal direction of the transport means formed by the carriers and thus parallel to the longitudinal direction of the carriers 1 themselves. Discharge chutes 4, discharge conveyors or the like may join the side(s) of the transport means, by means of which discharge chutes, discharge conveyors or the like objects 2 delivered thereto from the transport means may be transported further. Means known per se (not shown) are disposed near such discharge chutes, discharge conveyors or the like, by which means a desired number of pusher shoes may be moved from one side of the transport means, the bottom side in figures 1-3, to the other side of the transport means, so as to push an object 2 present on the transport means in the direction of the discharge chute 4 or the like in the manner illustrated in the figures. As is shown in particular in figure 3 there is a danger of an object becoming jammed hereby, in particular near its rear end, between the pusher shoes 3 moved along desired carriers 1 and pushing the object to one side and for example a pusher shoe already located near the side in question. This may be caused by the fact that the object, as a result of an outside influence, reamins or has remained slightly behind with respect to the pusher shoes moving the object to the side. This jamming may for example also occur when a object is moved to one side and pusher shoes running therebehind are moved in the direction of the other side or are for example disposed near the centre of the transport means. In order to prevent the risk of such jamming the configuration of the pusher shoe is as shown in figures 4 and 5 and described hereafter.

As is shown in more detail in figures 4 and 5 a carrier 1 preferably consists of an extruded section, for example of aluminium, which has an upper surface 5 for supporting the objects to be moved. Two side walls 6 en 7, extending at least substantially parallel to each other and including an acute angle with the upper surface 5, join the longitudinal edges of the upper surface 5. Substantially U-shaped parts 8 and 9 respectively join the bottom edges of the side walls 6 and 7, said parts bounding the spaces 10 and 11 respectively, which are open towards the outside of the section. Near the entry openings of the open spaces 10 and 11 the boundary walls are provided with inwardly projecting ribs 12 and 13 respectively, which extend along the length of the carrier.

Vertically extending side wall parts 14 and 15 respectively join the U-shaped parts 8 and 9, said parts blending into horizontally extending bottom wall parts 16 and 17 respectively. The wall part 16 is located slightly lower than the wall part 17, as will be apparent from figure 5.

The facing ends of the bottom wall parts 16 and 17 are connected by a substantially U-shaped connecting part 18, which bounds a slot 19 being open at the bottom side of the carrier and extending in the longitudinal direction of the carrier. The connecting part 18 thereby comprises opposed ribs 20 and 21 projecting into said slot.

Furthermore reinforcing ribs 20 are provided in the interior of the carrier, in the manner shown in figures 4 and 5.

The pusher shoe, which is preferably made of plastic material, is provided with a base 21, whose longitudinal edges are joined by upright wall parts 22 and 23 respectively, which blend into upwardly sloping wall parts 24 and 25 extending at least substantially parallel to the side wall parts 6 and 7 of the carrier. Near the transition between the wall parts 22 and 24 and between the wall parts 23 and 25 horizontally extending guide strips 26 and 27 respectively are provided, which extend into the open spaces 10 and 11 respectively and which are movably accommodated to fit tightly between the ribs 12 and 13 respectively.

The upper ends of the wall parts 24 and 25 are interconnected by a block-shaped part 28 located above the upper surface 5 of the carrier 1, said part having a substantially flat upper surface 29.

As will be apparent in particular from figure 4, the rear part of the block-shaped means 28 is more or less trapezoidal, seen in plan view, said rear part being bounded at the sides of the block-shaped part 28 by two at least substantially vertically extending pushing surfaces 30, at least one of which will abut against one side of an object to be moved during normal movement of an object by means of the pusher shoe in question, as is diagrammatically illustrated in figures 1-3.

In the illustrated embodiment a boundary surface 31 of the block joins the front edge of said pushing surface, seen in the intended direction of movement according to the arrow A, said boundary surface extending substantially vertically, at least substantially parallel to the direction of movement of the transport means. The height of said vertically extending boundary surface 31 gradually decreases towards the front thereby, whilst the maximum height of said boundary surface 31 is less than the height of the pushing surface 30, as will be apparent from figure 4. A boundary surface 32, which slopes upwards in the direction of the longitudinal axis of the upper surface 29 of the pusher shoe extending in the direction according to the arrow A, joins the upper edge of the boundary surface 31

As is furthermore apparent from figures 4 and 5 a rib 33, which extends upwards in the passage bounded by the aforesaid parts 21-28 of the pusher shoe, joins the bottom 21 of the pusher shoe, said rib being accommodated to fit between the guide ribs 20 and 21 located within the U-shaped connecting part 18. As is shown in figure 4 two resilient lips 34 and 35 are thereby provided near one end of the rib 33, said lips being connected to the rib 33 at one end. One lip 35 is located near the upper surface of the rib 33 thereby, whilst the other lip 34 is located near one side of the rib 33. The resilient lips 34 and 35, which are each connected near one end of the rib 33 so as to be pivotable about an imaginary pivot pin extending perpendicularly to the longitudinal axis of the rib 33, may be integral with the pusher shoe or be secured thereto as separate resilient tongues. The lips extend in the same direction from their connections to the rib 33 thereby, which facilitates the provision of the pusher shoe on the carrier 1.

It will be apparent that the rib 33 accommodated within the U-shaped connecting piece 18, which extends acrross the width of the pusher shoe, provides a good guiding of the pusher shoe when the pusher shoe is being moved in the longitudinal direction of the carrier 1, so that the pusher shoe is prevented from being undesirably pulled out of square with respect to the carrier 1. The guide strips 26 and 27 accommodated within the spaces 10 and 11 also contribute towards a good guiding of the pusher shoe. Any play is taken up by the resilient tongues 34 and 35 pressing against one side and the upper boundary wall respectively of the connecting piece 18 of the carrier 1. Resilient tongues of this type may also be provided on other parts of the pusher shoe, for example near the wall part 24 and/or 25, instead of or in combination with the resilient tongues 34 and 35.

As a result of this construction a satisfactory, rattle-free and low-noise movement of the pusher shoe 3 along the carrier 1 may be effected, using a simple construction of the carrier 1 and the pusher shoe. In order to effect the movement of the pusher shoe a guide pin 36 with a guide wheel 37 mounted thereon is secured to the bottom side of the pusher shoe, so as to co-operate with means kwown per se (not shown) for effecting a movement of the pusher shoe with respect to the carrier.

By using the above-described upwardly sloping boundary surface 32, which is located at the front side of the pusher shoe, seen in the intended direction of movement according to the arrow A, an object which contacts such a pusher shoe with its rear end, as is shown more in particular in figure 3 for the left-hand top corner of the object 2, will be able to move upwards along this sloping surface to the upper surface 29 of the pusher shoe, thus avoiding undesirable jamming of an object, which not only lead to damage to the object but also to serious damage to the pusher shoe and the driving mechanism for the pusher shoes.

## Claims

1. A conveyor comprising a frame and an endless drivable transport means, provided with carriers (1) extending transversely to the direction of movement (A) of the transport means, parallel to each other, which carriers (1) are pivotally coupled to at least one endless flexible coupling means, whilst at least a few of said carriers (1) support pusher shoes (3), which are movable along the carriers (1) in question at desired locations by guide means provided on the frame, wherein a pusher shoe (3) is in one piece and provided with a passage, through which the carrier (1) extends, the cross-section of said carrier (1) being adapted to the cross-section of the passage within the pusher shoe (3), **characterized in that** for guiding the pusher shoe (3) along the carrier (1) the carrier (1) comprises a slot (19) extending in the longitudinal direction of the carrier (1) and the pusher shoe comprises a rib (33) accommodated in said slot (19), and wherein said pusher shoe (3) comprises at least one resilient lip (34, 35), which abuts against a part of the carrier (1) with a certain bias and a resilient lip (34) of the at least one resilient lip is mounted on a side of the rib (33) forming part of the pusher shoe (3), in such a manner, that the rib (33) abuts with a certain force against a wall part of the carrier (1) bounding the slot in said carrier.

2. A conveyor according to claim 1, **characterized in that** a resilient lip (35) is mounted on the upper side of the rib (33) forming part of the pusher shoe (3) in such a manner that the rib (33) abuts with a certain force against a wall part of the carrier (1) bounding the slot in said carrier (1).

3. A conveyor according to any one of the preceding claims, **characterized in that** said rib (33) is mounted on a wall part of the pusher shoe (3) bounding the passage at the bottom side.

4. A conveyor according to any one of the preceding claims, **characterized in that** wall parts (22, 24, 25) of the pusher shoe (3) bounding the passage within the pusher shoe at the sides are provided with guide strips (26, 27) projecting into the passage, said guide strips (26, 27) being accommodated within corresponding recesses extending in the longitudinal direction of the carrier.

## Patentansprüche

1. Förderer, umfassend einen Rahmen und ein endloses, antreibbares Transportmittel, versehen mit Trägern (1), welche sich quer zur Bewegungsrichtung (A) des Transportmittels parallel zueinander erstrecken, wobei die Träger (1) schwenkbar mit zumindest einem endlosen flexiblen Kupplungsmittel gekoppelt sind, wobei zumindest einige der Träger (1) Ausstoßschuhe (3) tragen, welche entlang der genannten Träger (1) an gewünschten Orten durch Führungsmittel, welche auf dem Rahmen vorgesehen sind, bewegt werden können, wobei ein Ausstoßschuh (3) einstückig ausgebildet un mit einem Durchgang versehen ist, durch welchen sich der Träger (1) erstreckt, wobei der Querschnitt des Trägers (1) an den Querschnitt des Durchgangs innerhalb des Ausstoßschuhes (3) angepaßt ist, **dadurch gekennzeichnet, daß** der Träger (1) zum Führen des Ausstoßschuhes (3) entlang des Trägers (1) einen Schlitz (19) umfaßt, welcher sich in der Längsrichtung des Trägers (1) erstreckt, und der Ausstoßschuh eine Rippe (33) umfaßt, welche im Schlitz (19) aufgenommen wird, und wobei der Ausstoßschuh (3) zumindest eine elastische Lippe (34, 35) umfaßt, welche mit einer bestimmten Vorspannung gegen einen Teil des Trägers (1) anliegt und eine elastische Lippe (34) der zumindest einer elastische Lippe an einer Seite der Rippe (33), welche einen Teil des Ausstoßschuhs (3) darstellt, derart befestigt ist, daß die Rippe (33) mit einer gewissen Kraft gegen einen Wandungsteil des Trägers (1) anliegt, welcher den Schlitz im Träger begrenzt.

2. Förderer nach Anspruch 1, **dadurch gekennzeichnet, daß** eine elastische Lippe (35) an der Oberseite der Rippe (33), welche einen Teil des Ausstoßschuhs (3) darstellt, derart befestigt ist, daß die Rippe (33) mit einer gewissen Kraft gegen einen Wandungsteil des Trägers (1) anliegt, welcher den Schlitz im Träger (1) begrenzt.

3. Förderer nach einem beliebigen der vorhergehenden Ansprüche, **dadurch gekennzeichnet, daß** die Rippe (33) an einem Wandungsteil des Ausstoßschuhs (3) befestigt ist, welcher den Durchgang an der Unterseite begrenzt.

4. Förderer nach einem beliebigen der vorhergehenden Ansprüche, **dadurch gekennzeichnet, daß** wandungsteile (22, 24, 25) des Ausstoßschuhs (3), welche den Durchgang innerhalb des Ausstoßschuhs an den Seiten begrenzen, mit Führungsleisten (26, 27) versehen sind, welche in den Durchgang ragen, wobei die Führungsleisten (26, 27) in entsprechenden Ausnehmungen aufgenommen werden, welche sich in Längsrichtung des Trägers erstrecken.

## Revendications

1. Transporteur comprenant un châssis et un moyen de transport entraînable sans fin, pourvu d'éléments porteurs (1) s'étendant transversalement à la direction de mouvement (A) du moyen de transport, parallèlement les uns aux autres, ces éléments porteurs (1) étant reliés de façon pivotante à au moins un moyen de couplage flexible sans fin, tandis qu'au moins certains desdits éléments porteurs (1) supportent des sabots de poussée (3) qui sont déplaçables le long des éléments porteurs correspondants (1) à des endroits désirés par un moyen de guidage prévu sur le châssis, dans lequel un sabot de poussée (3) est en une seule pièce et comporte un passage à travers lequel s'étend l'élément porteur (1), la section transversale dudit élément porteur (1) étant adaptée à la section transversale du passage dans le sabot de poussée (3), **caractérisé en ce que**, pour guider le sabot de poussée (3) le long de l'élément porteur (1) comprend une rainure (19) s'étendant dans la direction longitudinale de l'élément porteur (1) et le sabot de poussée comprend une nervure (33) logée dans ladite rainure (19), et dans lequel ledit sabot de poussée (3) comprend au moins une lèvre élastique (34, 35) qui bute contre une partie de l'élément porteur (1) avec une certaine pression et une lèvre élastique ( 34) d'au moins une lèvre élastique est montée sur un côté de la nervure (33) faisant partie du sabot de poussée (3), d'une manière telle que la nervure (33) bute avec une certaine force contre une partie de paroi de l'élément porteur (1) délimitant la rainure dudit élément porteur.

2. Transporteur selon la revendication 1, **caractérisé en ce qu'**une lèvre élastique (35) est montée sur le côté supérieur de la nervure (33) faisant partie du sabot de poussée (3) d'une manière telle que la nervure (33) bute avec une certaine force contre une partie de paroi de l'élément porteur (1) délimitant la rainure dudit élément porteur (1).

3. Transporteur selon une quelconque des revendications précédentes, **caractérisé en ce que** ladite nervure (33) est montée sur une partie de paroi du sabot de poussée (3) délimitant le passage sur le côté intérieur.

4. Transporteur selon une quelconque des revendications précédentes, **caractérisé en ce que** des parties de paroi (22, 24, 25) du sabot de poussée (3) délimitant le passage à l'intérieur du sabot de poussée sur les côtés comportent des bandes de guidage (26, 27) qui font saillie dans le passage, lesdites bandes de guidage (26, 27) étant logées dans des évidements correspondants qui s'étendent dans la direction longitudinale de l'élément porteur.
